# EUROPEAN PATENT APPLICATION

(11) **EP 1 995 181 A1**
(43) Date of publication of application: **26.11.2008**
(21) Application number: 07388036.1
(22) Date of filing: 21.05.2007
(51) Int. Cl.: B65D 47/06, G01F 11/26

(54) **A dispensing device for liquid product**

(71) Applicant: Logidos ApS, 6200 Aebenraa (DK)
(72) Inventor: The designation of the inventor has not yet been filed

(57) **Abstract**

The present invention relates to a dispensing device for dispensing a liquid product from a container containing said product, the dispensing device (1) comprising an inlet passage (4) for fluid communication from a container to a first chamber (5), which first chamber (5) is in fluid communication through an intermediate passage (6) of a given longitudinal extension (I) with a second chamber (7), which second chamber (7) is in fluid communication through an outlet passage (8) with an outlet (9) of the dispensing device. Preferably the intermediate passage has a length in the range 1.5 to 2.0 cm. The invention furthermore relates to a container, such as a bottle provided with the dispensing device in the outlet portion of the container. Using the dispensing device according to the invention a very accurate and reproducible amount of a liquid product, such as cleaning materials, detergents, softeners, liquid toilet soap, shampoo and medicine, can be delivered from the dispensing device without activating movable parts but merely by applying a sequence of tilting movements of the container in a manner that is easy and intuitively correct for a user.

## Description

### TECHNICAL FIELD

The present invention relates to a dispenser device for a liquid product and to a container provided with such a device.

### BACKGROUND OF THE INVENTION

Dispensing devices for liquid products, such as cleaning materials, detergents, softeners, liquid toilet soap, shampoo and medicine are known in many varieties in the art. Thus for instance US 6,419,125 B1 discloses a dispenser of the kind well known for instance for liquid toilet soap comprising a piston arrangement for insertion into the neck portion of a bottle and provided with a nozzle through which the content of the bottle is dispensed when the piston arrangement is activated.

US 2006/0113330 A1 discloses a lever actuated measured fluid dispenser for bottles containing a liquid detergent comprising a pivotally mounted lever that, upon activation by the hand of the user opens and provides fluid communication from the interior of the bottle, upon which the dispenser is mounted, to the outlet from the dispenser.

US 5,824,012 discloses a nursing bottle with medication dispenser, where the dispenser comprises a cylinder and piston arrangement that upon application of a pressure on the piston forces a liquid medication out of an internal volume through a nozzle section and out of the nursing bottle, mixed with the contents of the nursing bottle.

The above mentioned dispensers are relatively complex and requires movable parts for dispensing an accurate amount of a liquid product. It would be beneficial for the user to have access to a dispensing device where activation of a piston or lever mechanism for accurately dispensing the product would not be required. Also from a manufacturing point of view it would be advantageous to provide an accurately functioning dispensing device that could operate without such movable parts, merely by tilting the bottle or other container in the manner that would appear natural to a user.

### SUMMARY OF THE INVENTION

On the above background it is an object of the present invention to provide a dispensing device for a liquid product that functions without movable parts merely by appropriately tilting the bottle or other container upon which the dispensing device is mounted and yet being able to dispense a very precise and reproducible amount of liquid.

It is a further object of the invention to provide a dispensing device of the above kind that is easy and inexpensive to manufacture.

According to the invention, the above objectives are obtained by a dispensing device for a liquid product, which dispensing device may be designed for releasable insertion into and attachment to an outlet of a hand-held container, for instance into the neck portion of a bottle or a carton.

The dispensing device according to the present invention basically comprises an inlet passage for fluid communication from said container to a first chamber, which first chamber is in fluid communication through an intermediate passage of a given longitudinal extension with a second chamber, which second chamber is in fluid communication through an outlet passage with an outlet of the dispensing device.

When the container is initially turned from an upright position to a position with the outlet facing in a more or less inclined downward direction liquid from the container flows through the inlet passage and into the first chamber. Upon turning the container to a direction where the outlet in an upward direction a portion of the liquid flows from the first chamber through the intermediate passage and into the second chamber. When the container is again turned so that the outlet points in a downward direction a portion of the liquid in the second chamber flows outwards through the outlet passage and leaves the dispensing device through its outlet. This series of tilting operations is experienced by a user as natural and makes application of the dispensing device according to the invention easy and intuitively correct.

The dispensing device according to the invention comprises and inlet wall and an outlet wall extending substantially longitudinally in the device, the inlet wall extending from a second end portion of the device opposite the outlet of the device to a distal end and the outlet wall extending from a first end portion of the device, at which first end portion the outlet from the device is provided and opposite said second end portion to a distal end, such that the distal end regions of the inlet and outlet walls overlap each other over a distance I, thereby defining said intermediate passage in the dispensing device, having a longitudinal extension equal to I.

According to a preferred embodiment said longitudinal extension of the intermediate passage is at least one third of the longitudinal extension of said outlet passage or one third of said outlet wall or one third of said inlet wall.

According to a typical embodiment said longitudinal extension of the intermediate passage is in the range 1.5 to 2.0 cm.

The dispensing device according to the invention can be made of plastic material, but other materials are also possible, such as cardboard etc. The dispensing device according to the invention can be made as a separate unit for releasable attachment to a bottle or other container, but the invention also covers assemblies comprising a bottle/container provided with the dispensing device according to the invention as an integrated part of the assembly.

By means of the dispensing device according to the invention, an intuitively easily understandable and easily implementable pouring motion of the bottle or container will entail dispensing of a liquid product without having to access the interior of the container and without any substantial risk of spilling the product. Thus, by application of the dispensing device according to the invention, the correct dosage of product from the bottle or container can be ascertained, thereby also reducing the risk of overdosing and potential waste of the product. The dispensing device according to the invention may thus also lead to economically advantageous results.

According to a preferred embodiment the outlet portion of the dispensing devise is provided with a closure means that must be removed or opened prior to use of the dispensing device. Embodiments of such closure means are shown in the detailed description of the invention.

Using the dispensing device according to the invention a very accurate and reproducible amount of a liquid product, such as cleaning materials, detergents, softeners, liquid toilet soap, shampoo and medicine, can be delivered from the dispensing device.

### BRIEF DESCRIPTION OF THE DRAWINGS

In the following, the invention will be explained in more detail in connection with different embodiments of the dispensing device according to the invention shown, solely by way of example, in the accompanying drawings where:
Figure 1 shows a schematic perspective cross sectional view of a first embodiment of the dispensing device according to the invention;
Figure 2 shows a perspective, transparent view of a portion of the dispensing device shown in figure 1 with a cross section taken along line A - A in figure 1 illustrating a preferred cross sectional shape of the inlet and outlet walls;
Figure 3 shows a longitudinal transparent cross sectional view of the dispensing device shown in figure 1;
Figure 4a shows a schematic perspective view of the embodiment of the invention shown in figure 1, where the dispensing device is provided with a protective cap;
Figure 4b shows a schematic perspective view of the embodiment of the invention shown in figure 1 with the protective cap removed;
Figure 5a shows a schematic, perspective view of a second embodiment of the dispensing device according to the invention;
Figure 5b shows a schematic, perspective view of the embodiment shown in figure 5a seen through the open outlet and showing details of the outlet wall of the dispensing device;
Figure 5c shows a plane view from the outlet end of the dispensing device shown in figure 5a and 5b with the shape of the inlet and outlet walls of this particular embodiment indicated;
Figure 5d shows a perspective, transparent view of the dispensing device shown in figure 5a, b and c illustrating various internal structures and details of the closure means according to this embodiment;
Figure 5e shows another perspective, transparent view of the dispensing device shown in figure 5a, b and c illustrating various internal structures and details of the closure means according to this embodiment; and
Figure 6 shows the first embodiment of the dispensing device according to the invention - shown in cross sectional view - inserted in the neck portion of a bottle.

### DETAILED DESCRIPTION OF THE INVENTION

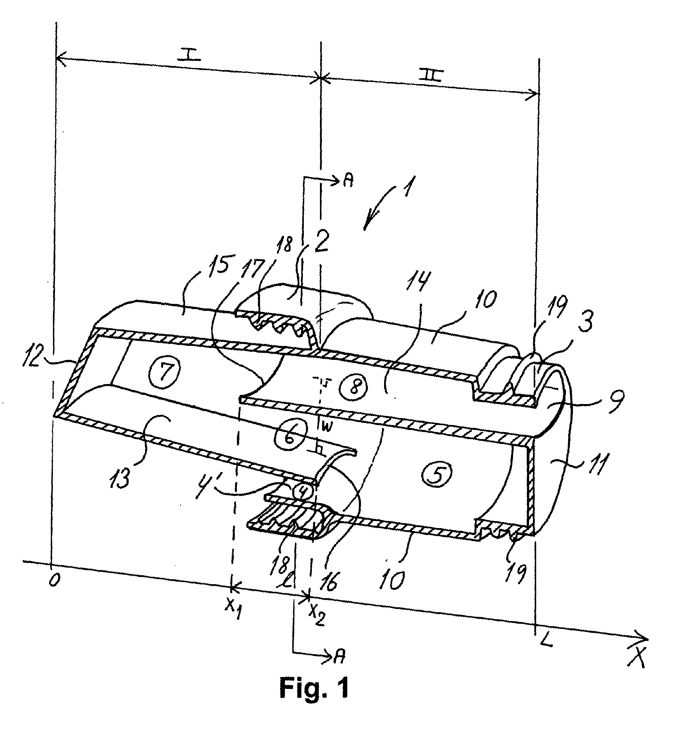

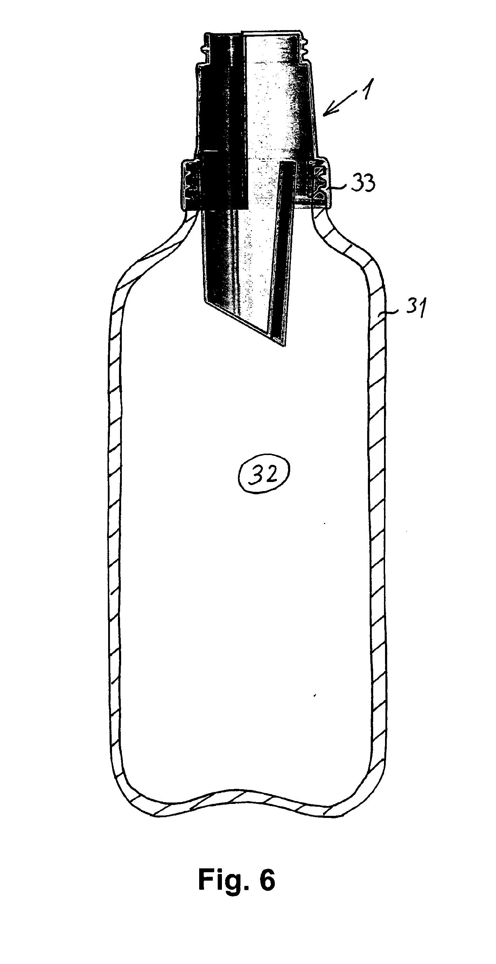

Referring to figure 1, there is shown a schematic perspective cross sectional view, of a first embodiment of the dispensing device according to the invention, generally indicated by reference numeral 1. The dispensing device can be releasably inserted into an outlet of a container, as shown in figure 6. The device according to this embodiment comprises an elongated substantially tubular or cylindrical dispenser body, where a first section I is formed for insertion into the neck portion of for instance a bottle and a second section II protrudes outwardly from the neck portion. The dispenser can in this embodiment be attached to the neck portion of a bottle by a threaded tubular portion 2, the thread 18 of which is formed for engagement with a corresponding thread on the outer surface of the neck portion. Other attachment means, both releasable and non-releasable, could of cause also be used. The body of the dispensing device basically comprises the outer circumferential wall portions 10 and 15, the external portion of the inlet wall 13 and the end portions 11 and 12, which in the shown embodiment are substantially planar, although other shapes may also be applied. The second section II is in the shown embodiment provided with a distal threaded portion 3 with a thread 19 for releasable attachment of a closure member or cap. Other closure means may also be employed as shown in the following. The dispensing device comprises basically an inlet passage 4, formed between a distal end portion of the inlet wall 13 and an internal portion 4' of the circumferential body of the dispensing device, for fluid communication from the interior of the bottle or other container to a first chamber 5, which first chamber 5 is in fluid communication through an intermediate passage 6 of a given longitudinal extension I with a second chamber 7, which second chamber 7 is in fluid communication through an outlet passage 8 with an outlet 9 of the dispensing device. The intermediate passage 6 is defined by the distal end portions of the inlet and outlet walls 13, 14 and the corresponding portions of the outer circumferential wall of the dispensing device.

In figure 1 dimensions and relative orientations of the various structures of the dispensing device are defined with reference to the longitudinal axis X through the device. The X-axis is oriented away from the interior of the bottle or container.

The internal structure comprising the above mentioned channels and chambers 4, 5, 6, 7 and 8 are partly defined by the outer wall portions of the dispensing device and partly by a substantially longitudinally extending inlet wall 13 and a substantially longitudinally extending outlet wall 14. The inlet wall 13 and the outlet wall 14 overlap each other over a certain longitudinal distance, i.e. the distance x2 - x1 = I in figure 1. This overlap region together with the corresponding portions of the outer circumferential wall portions 10 and 15 form as mentioned above said intermediate passage 6.

According to a specific embodiment the longitudinal extension I (i.e. x2 - x1) of the intermediate passage 6 is at least one third of the longitudinal extension of the outlet passage 8, i.e. at least one third of the outlet wall 14 and/or at least one third of the inlet wall 13. Specifically according to a presently preferred embodiment the longitudinal extension I of the intermediate passage 6 is in the range 1.5 to 2.0 cm.

As shown in figure 1 the inlet wall 13 is slightly tilted relative to the longitudinal axis through the dispensing device and relative to the outlet wall 14. The inlet wall 13 may, however, also extend in parallel with the outlet wall 14 or even be tilted oppositely to the manner shown in figure 1. Thus the width w of the intermediate channel 6 may be constant over its entire longitudinal extension or vary over its longitudinal extension. Furthermore the outlet wall 14 may also be tilted relative to the longitudinal axis through the dispensing device.

The cross sectional shape of the inlet and outlet walls 13, 14 may be planar, but according to the embodiment shown in figure 1 - and also in the following figures - curved wall sections are applied. The centres of curvature of the inlet and outlet walls are situated towards the outer circumferential wall portions or beyond there resulting in inlet and outlet passages 4 and 8, respectively, having larger cross sectional areas than would have been obtained with planar inlet and outlet walls and furthermore of a generally more rounded cross sectional shape, which may be advantageous from a flow dynamic point of view. The cross sectional shape of the various passages in the dispensing device will appear more clearly from the following figures.

Although the two sections I and II of the dispensing device are shown of substantially equal longitudinal extension in the embodiment of figure 1 these section may be of different longitudinal extension. Thus, for instance, section II could be of reduced length, for instance essentially only comprising the threaded end portion 3. Furthermore these sections may be formed differently than actually shown in figure 1, for instance tapering to a larger extend than shown or being cylindrical of shape. It should also be noted, that the basic principle of the present invention may be embodied by dispensing devices of quite different shapes than those actually shown in the present specification. Thus it would not fall outside the scope of the present invention to apply dispensing devices of for instance a generally ellipsoidal, square or rectangular cross section.

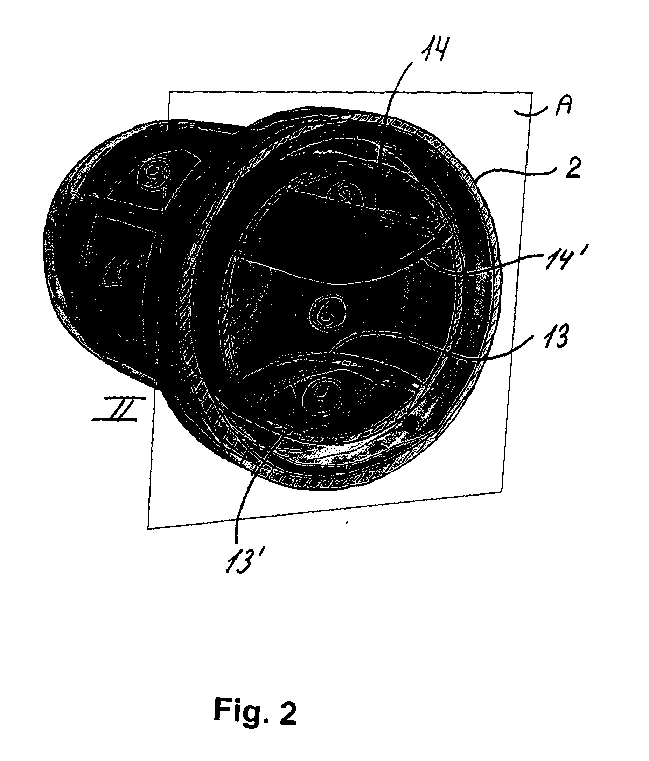

Referring to figure 2 there is shown a perspective, transparent view of a portion of the dispensing device shown in figure 1 with a cross section taken along line A - A in figure 1 illustrating a preferred cross sectional shape of the inlet and outlet walls 13, 14. The dispensing device is viewed towards the outlet opening 9 and corresponding end wall 11 and the cross section is made through the threaded attachment portion 2. Figure 2 clearly depicts the inwardly curved cross sections 13' and 14' of the corresponding inlet and outlet walls 13 and 14, respectively. Thus the respective centres of curvature of the inlet wall 13 and the outlet wall 14 are located outside the intermediate passage 6 towards or beyond the respective external surfaces of the dispensing device.

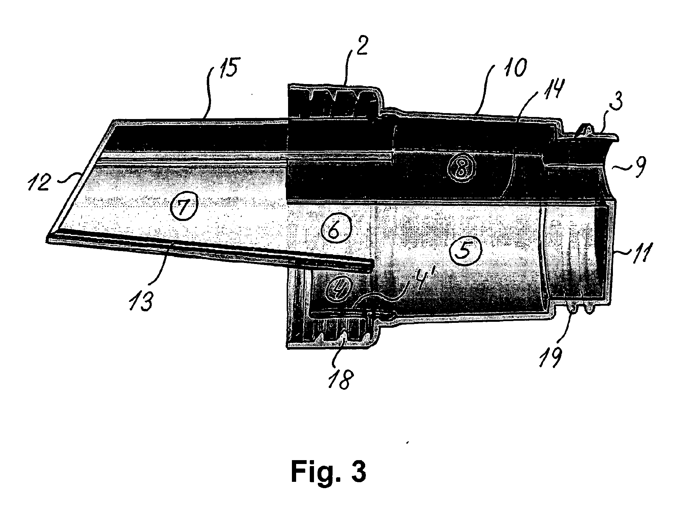

Referring to figure 3 there is shown a longitudinal transparent cross sectional view of the dispensing device shown in figure 1. The flow path of a liquid product out of a bottle (not shown in figure 3) into the neck portion of which the dispensing device is inserted is clearly illustrated by figure 3. The flow path starts with the inlet passage 4 defined by a circumferential internal inlet portion 4' and the corresponding portion of the inlet wall 13, from which inlet passage 4 the product - when the bottle or container is tilted so that the outlet 9 points in a downward direction - can flow into a first chamber 5 defined by the outer circumferential wall portion 10 of the device, the end portion 11 and the outlet wall 14. From the first chamber 5 the material can flow through the intermediate passage 6 into the second chamber 7 upon tilting the bottle or container with the outlet pointing in an upward direction. The second chamber 7 is defined by the inlet wall 13, the end portion 12 and the circumferential wall portion 15. Upon again tilting the bottle or container with the outlet 9 pointing in a downward direction the liquid product flown from the second chamber 7 through the outlet passage 8 defined by the outlet wall 14 and the corresponding portion of the circumferential wall portion 10 and finally out through the outlet opening 9. The end portion 12 is in figure 3 shown inclined relative to the longitudinal axis through the dispensing device, but this portion could also extend substantially perpendicularly to the longitudinal axis. Furthermore it need not be planar as shown in figure 13, but could for instance be more or less rounded, as shown in the following figures.

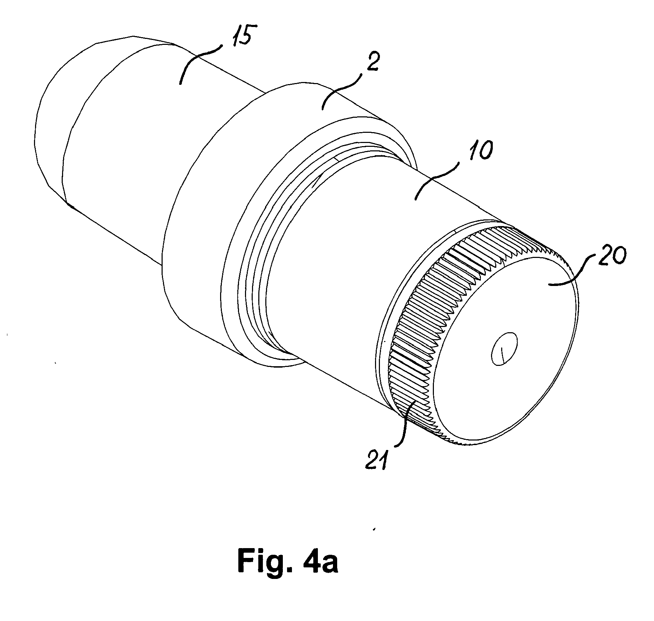

Referring to figure 4a there is shown a schematic perspective view of the embodiment of the invention shown in figure 1, although with a rounded end portion 12, where the dispensing device is provided with a protective cap 20 provided with a circumferential serration 21 in order to facilitate removal of the cap 20 from the end portion 3 of the dispensing device. The cap can be provided with threads corresponding to those shown in figure 1 at reference numeral 19, but other means of attachment for the cap to the dispensing device are also possible.

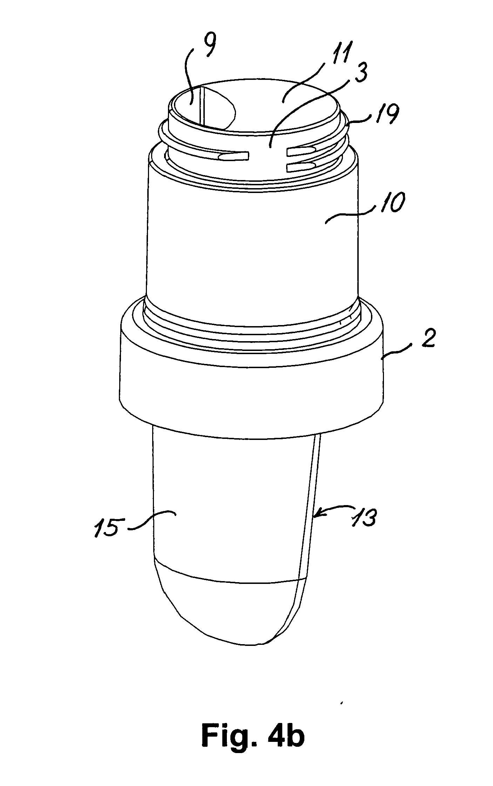

Referring to figure 4b there is shown a schematic perspective view of the embodiment of the invention shown in figure 1 and 4b with the protective cap removed. The various major parts are indicated by the same reference numerals as above.

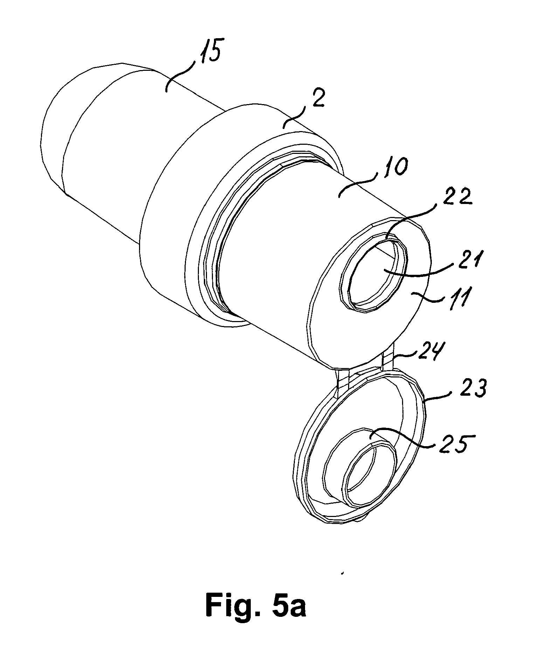

Referring to figure 5a through 5e there is shown a schematic, perspective view of a second embodiment of the dispensing device according to the invention. Figure 5a shows the second embodiment externally essentially corresponding to the first embodiment described above but provided with an alternative closure system in the end portion 11 of the device. The second embodiment comprises a circular outlet opening 21 provided with a circumferential edge portion extending longitudinally in an outward direction from the end portion 11 of the device. Attached to the device adjacent the end portion 11 there is provided a hinge 24, by means of which a circular cap member 23 dimensioned to be able to cover the whole end portion 11 is connected to the device. On the innermost surface of the cap member 23 a cylindrical member 25 is provided, placed and dimensioned such that it will fit into the outlet opening 21, when the cap member 23 is closed on the device.

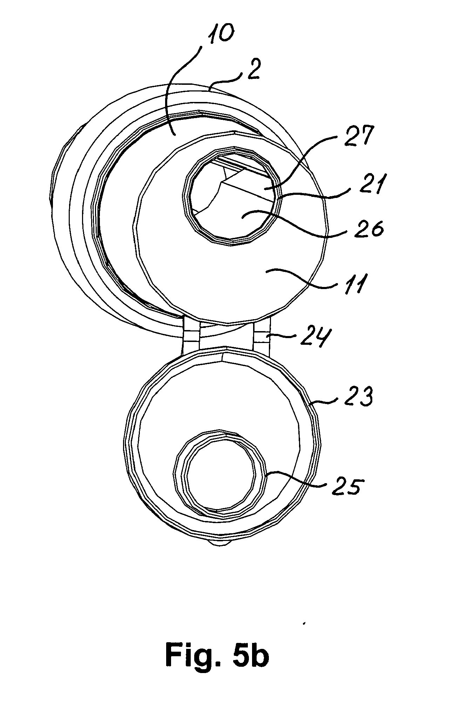

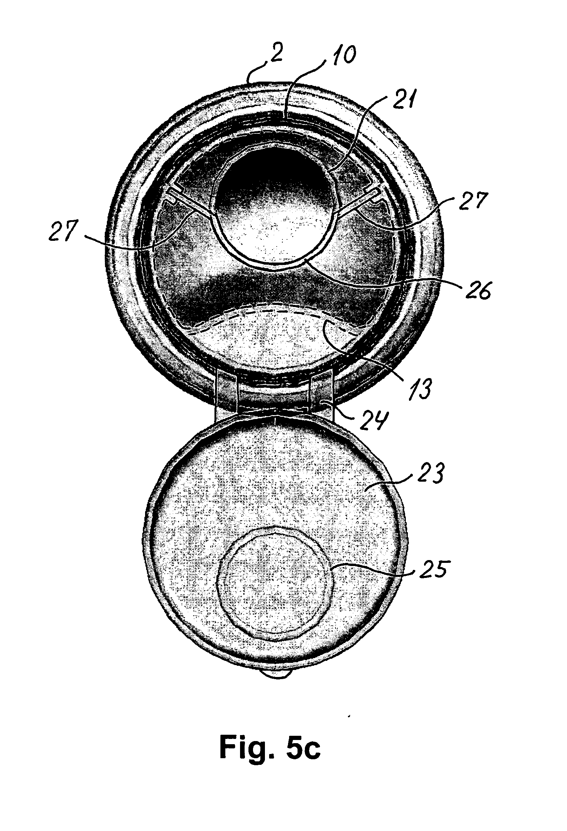

Referring to figure 5b there is shown a schematic, perspective view of the embodiment shown in figure 5a seen through the open outlet 21 and showing details of the outlet wall 26, 27 of the dispensing device according to this embodiment. The outlet wall according to the second embodiment comprises two portions: a cylindrical surface portion 26, the radius of which substantially corresponds to the radius of the outlet opening 21 and two, radially extending, substantially planar surface portions 27 connecting the central cylindrical surface portion 26 with the respective portions of the outer circumferential wall portion 10. The details of the outlet wall 26, 27 according to this embodiment appears more clearly from figure 5c, where there is shown a plane view from the outlet end of the dispensing device shown in figure 5a and 5b with the shape of the inlet and outlet walls of this particular embodiment indicated. Thus the inlet wall 13, shown in schematic cross section is indicated by broken lines and the outlet wall 26, 27 and the circumferential wall portion 10 are highlighted for clarity. As shown the cylindrical portion 26 corresponds in radius to the outlet opening 21 and extends circumferentially over a little less than 180 degrees of the circumference of the outlet opening 21. From either circumferential end of the cylindrical portion 26 there extend the planar surface portions 27 that connect the central cylindrical portion 26 with the outer wall portion 10. The exact dimensions, extends and angles formed by these internal structures can be varied according to specific requirements.

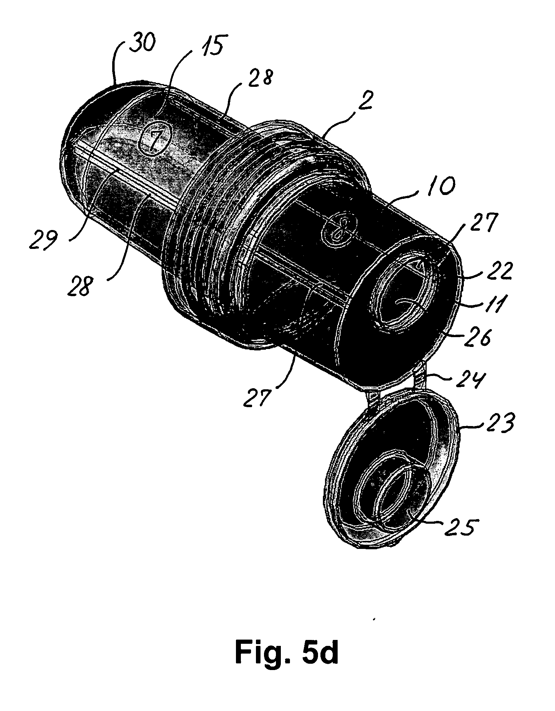

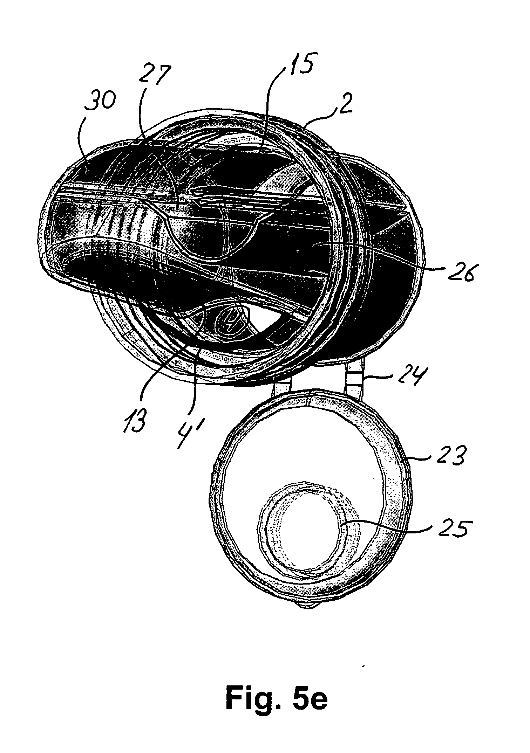

A practical design of the second embodiment of the dispensing device according to the invention is illustrated in figures 5d and 5e in the form of perspective, transparent views illustrating both the main internal and external structures of the device. Structures already shown and described previously are indicated by the same reference numerals as previously and will not be described again. Two features not mentioned previously are indicated in figures 5d and 5e: The end portion of the dispensing device at the longitudinal end of the device facing the bottle or container (see also figure 6) that in the first embodiment shown in figure 1 consisted of a planar, inclined wall portion 12 is in the second embodiment replaced by a rounded end portion 30. It is however understood that numerous other shapes may also be employed. Another feature that appears from figures 5d and 5e is the provision of two longitudinally extending guide members 28 provided on the inner surface of the second chamber 7, each provided with a groove 29, the width of which corresponds to the corresponding width of the radially outermost edge portions of the outlet wall 27 (or 14 in the embodiment shown in figure 1). The dispensing device may be moulded in two parts (corresponding to sections I and II described in connection with figure 1 above) during manufacturing hereof and during assembly of the dispensing device the two sections may be displaced relative to each other with the radially outer edge regions of the outlet wall (26, 27; 14) running in the groves 29 on the inner surface of section I. This ensures a correct positioning of the two sections relative to each other in a simple and reliable manner. The alternative configuration, i.e. guide members provided on the inner surface of the first chamber 5 for co-operation with edge portions of the inlet wall 13 would also be possible.

Referring to figure 6 there is finally shown the first embodiment of the dispensing device according to the invention, shown in cross sectional view, described previously in connection with figures 1, 2 and 3 inserted in the neck portion 33 of a bottle 31 comprising an internal volume 32 for accommodating the liquid product to be dispensed by the device according to the invention.

## Claims

1. Dispensing device for dispensing a liquid product from a container containing said product, the dispensing device (1) comprising an inlet passage (4) for fluid communication from a container to a first chamber (5), which first chamber (5) is in fluid communication through an intermediate passage (6) of a given longitudinal extension (I) with a second chamber (7), which second chamber (7) is in fluid communication through an outlet passage (8) with an outlet (9) of the dispensing device.

2. Dispensing device according to claim 1, where the longitudinal extension (I) of said intermediate passage (6) is at least one third of the longitudinal extension of said outlet passage (8).

3. Dispensing device according to claim 1 or 2, where said longitudinal extension (I) is in the range 1.5 to 2.0 cm.

4. Dispensing device according to claim 1, where the device comprises and inlet wall (13) and an outlet wall (14) extending substantially longitudinally in the device, the inlet wall extending from a second end portion (12) of the device opposite the outlet (9) of the device to a distal end (16) and the outlet wall (14) extending from a first end portion (11) opposite said second end portion (12) to a distal end (17), such that the distal end regions of the inlet and outlet walls (13, 14) overlap each other over a distance I = x2 - x1, thereby defining said intermediate passage (6) in the dispensing device.

5. Dispensing device according to claim 4, where the longitudinal extension (I) of said intermediate passage (6) is at least one third of the longitudinal extension of said inlet wall (13) and/or said outlet wall (14).

6. Dispensing device according to claim 5, where said inlet wall (13) and/or said outlet wall (14) are planar.

7. Dispensing device according to claim 5, where said inlet wall (13) and/or said outlet wall (14) are curved.

8. Dispensing device according to claim 7, where said inlet wall (13) and /or said outlet wall (14) are inwardly curved, i.e. their respective centres of curvature are located outside the intermediate passage (6) towards or beyond the respective external surfaces (10, 15) of the dispensing device.

9. Dispensing device according to any of the preceding claims, where the device is provided with a removable protective cover or cap (20) for covering the outlet portion (3, 9, 11) of the device.

10. Dispensing device according to claim 1, where the outlet wall (14) comprises a central portion (26), the cross sectional shape of which corresponds to a portion of the circumference of the outlet (9, 21).

11. Dispensing device according to claim 10, where said central portion (26) on either longitudinally extending edge portions hereof is provided with radially extending portions (27) connecting the central portion (26) with the outer circumferential wall (10) of the dispensing device, the outlet wall (14) thereby comprising said central portion (26) and said radially extending portions (27).

12. Dispensing device according to claim 10 or 11, where said outlet (21) is substantially circular.

13. Dispensing device according to claim 10, 11 or 12, where the device is provided with a protective cover, hingedly (24) connected to the device, where the cover is provided with a member formed for insertion into the outlet (21), when the cover is closed upon the outlet end portion (11, 21) of the device.

14. Dispensing device according to any of the preceding claims, where the device on inner surfaces of the device is provided with longitudinally extending guide members (28), each provided with a groove (29), the width of which corresponds to the width of the radially outermost edge portions of the outlet wall (14, 27) or of the inlet wall (13), whereby the device can be assembled from two parts, substantially corresponding a first (I) and a second (II) sections) of the device.

15. Dispensing device according to any of the preceding claims, where the device is provided with a circumferentially extending tubular portion (2) provided with attachment means (18) for releasable engagement with corresponding means on a container, upon which the device can be provided.

16. A hand-held container (31) into which a dispensing device (1) according to any of the preceding claim 1 to 15 is inserted, the dispensing device (1) and the container (31) together defining a passageway (4, 5, 6, 7, 8, 9) for material in the container from the interior (32) of the container (31) through the dispensing device (1).

17. A hand-held container (31) according to claim 16, where the container (31) is provided with attachment means (33) for releasable attachment to co-operating attachment means (18) provided on the dispensing device (1).

18. A hand-held container (1) according to claim 17, where said attachment means (18, 33) are co-operating threaded portions.
